# EUROPEAN PATENT SPECIFICATION

(11) **EP 0 587 452 B1**
(45) Date of publication and mention of the grant of the patent: **07.01.1998**
(21) Application number: 93307192.0
(22) Date of filing: 13.09.1993
(51) Int. Cl.: B62H 3/08

(54) **Improvements relating to devices for use in securing a bicycle against theft**
Verbesserungen an Vorrichtungen zur Fahrraddiebstahlsicherung
Perfectionnements aux dispositifs pour assurer une bicyclette contre le vol

(30) Priority: 11.09.1992 GB 9219251
(43) Date of publication of application: 16.03.1994
(73) Proprietor: B. DIXON-BATE LIMITED, Deeside, Clwyd CH5 2LG, Wales (GB)
(72) Inventor: Miles, Phillip Llewelyn, Tarvin, Chester CH3 8LX (GB); Robbins, Andrew Mark, Pentre, Clwyd CH5 2AD (GB); Breeze, Stephen Keith, Little Sutton, South Wirral L66 4TG (GB)
(74) Representative: Geoffrey Owen & Company

(56) References cited:
- DE-A- 3 504 637
- GB-A- 2 245 238
- US-A- 3 865 245
- US-A- 3 964 610

## Description

The present invention relates to a device for securing a bicycle against theft.

More particularly the present invention relates to a device for use in securing a bicycle in a fixed location, and by the term 'bicycle' a two-wheeled personal transport comprising front and rear wheels secured to a frame on which one or possibly two persons can sit, is meant, the two-wheeled personal transport being either physically pedal driven or motorised. Thus, the term 'bicycle' as used hereinbefore and hereinafter covers pedal driven bicycles, motor assisted bicycles, and motor cycles.

To secure a bicycle against theft it is known to utilise a bicycle security device which is bolted or otherwise secured to the ground region, the device having pivotal members which can be moved to a position wherein they extend over the lower regions of the rims of the front and rear wheels, said pivotal members being then locked in this position to secure the bicycle until it is required to be released.

Also, this known security device can have a further pivotal arm which can be engaged through the frame of the bicycle and locked in position to provide for added security, i.e. the wheels and frame are independently secured. Such a known device requires the bicycle wheels to be accurately positioned relative to the said pivotal members, and this can lead to problems, especially if the device is used in haste. Also, a device of this type is usually designed to cater for one particular size of bicycle, i.e. to cater for a particular front-to-rear wheel spacing. A modified security device of this type is known, wherein at least one of the said pivotal members is adjustable to thus allow the spacing between the pivotal members to be adjusted to enable the device to be adapted for use with different size bicycles. However, this can present a further difficulty in that a person may well have to adjust the pivotal arm spacing at ground level before accurately positioning the bicycle. This is clearly undesirable in inclement weather and/or when in a hurry. Also, wear and tear on extra moving parts can increase the possibility of the device jamming and being inefficiently or incorrectly usable, to actually unusable.

Further U.S. Patent Specification No 3865245 discloses a device for securing a bicycle in a fixed location, which device comprises a retaining assembly which, in use, is secured to the ground. The retaining assembly includes a generally L-shaped member, one arm of which is axially slidable and rotatable about a substantially vertical axis relative to another member of the assembly, the other arm of the generally L-shaped member being movable to a position wherein said other arm extends, in use, through a frame of the bicycle, the L-shaped member being then lockable to secure the bicycle in the fixed location. However, difficulty can be experienced in locating said other arm through the said frame prior to locking.

The aim of the present invention is to provide an easy-to-use device for use in securing a bicycle safely in a fixed location wherein the device can be immediately used with a variety of bicycle sizes without presenting any real problem.

According to the present invention there is provided a device for securing a bicycle, motor-assisted bicycle and/or motor cycle in a fixed location, comprising a retaining assembly and a locking member which, in use, are secured to the ground, the retaining assembly comprising a generally L-shaped member, one arm of the generally L-shaped member being axially slidable and rotatable about an at least substantially vertical axis relative to another member of said assembly, the other arm of the generally L-shaped member being movable to a position wherein said other arm extends, in use, through a frame of a bicycle located between said locking member and said another member of said assembly, said other arm being lockable to the locking member in any one of a number of vertically spaced apart locking positions, characterised in that the generally L-shaped member is constructed in two parts which are hinged together so as to be pivotable relative to each other about a substantially horizontal axis, whereby said other arm of said generally L-shaped member has effectively three degrees of possible movement to facilitate location of said other arm through a frame of a bicycle.

Thus, by virtue of the construction of the present invention, a bicycle can be located between the retaining assembly and the locking member, and the L-shaped member of the retaining assembly can be first moved to extend through the bicycle frame and then moved downwards to engage or nearly engage the frame, to thus positively secure the bicycle to the ground, the vertically spaced apart locking positions on the locking member allowing the construction of the present invention to be used with a variety of bicycle frame wheel sizes.

In a preferred embodiment of the present invention, said other arm of said generally L-shaped member has a transverse bore provided in its free end region, said free end region being engageable in an elongate vertically orientated recess in the locking member and positionable to align said transverse bore with any one of a number of vertically spaced apart pairs of aligned apertures preferably provided in both of the facing walls of the recess. Having selected the pair of aligned apertures to give the required vertical height for the generally L-shaped member, a preferably cylindrical lock assembly is engaged in the aligned apertures and said transverse bore, to thus lock the L-shaped member of the retaining assembly to the locking member. The lock assembly preferably has outwardly extending gripping members which retract when an appropriate key is engaged in an end of the lock assembly. Thus, the lock assembly can be easily carried by a person and used as and when required at any location where a device constructed according to this preferred embodiment of the present invention is provided.

In addition to, or instead of the above preferred locking arrangement, a number of vertically spaced-apart padlock eyelets can be provided on the locking member and a like eyelet is provided on the generally L-shaped number of the retaining assembly. Thus, by moving the L-shaped member vertically as desired, said like eyelet may be aligned with a selected eyelet on the locking member and a conventional padlock used to secure the retaining assembly and locking member together.

The locking arrangement described hereabove may be replaced by an arrangement comprising an elongate cylindrical rod provided with a series of circumferential grooves along its length and an axially extending flat surface, the rod being located vertically within a housing so as to be rotatable about its longitudinal axis. The housing has an elongate opening through which said other arm of the L-shaped member can project. A locking head is provided on free end of said other arm, the locking head having a series of parallel projections and grooves which are complimentary to the grooves on the said cylindrical rod. By rotating the cylindrical rod to a position wherein said flat surface is opposite the opening in the housing the locking head can be inserted through a wider upper region of the opening and the said other arm lowered to a selected height, vertical grooves in the locking head being engaged by the side edges of the narrower lower part of the opening to hold the locking head adjacent said flat surface of the rod. At the selected height the rod can be rotated to cause the grooves on the locking head and rod to interengage. By securing the rod against further rotation the device of the present invention is locked.

Rotation and locking of the cylindrical rod can be attained by a member of possible arrangements. For example the cylindrical rod may be manually rotatable with a key operated cylinder lock being insertable against an appropriate flat surface on the cylindrical rod to lock the cylindrical rod in the locked rotational position. Alternatively coin operated or computer controlled/electrically operated mechanisms may be utilised.

As will be appreciated, the construction of the present invention may be used to easily and positively secure a bicycle in a domestic or public fixed location. However, whilst it is somewhat of a complicated operation to detach a rear wheel of a bicycle from a frame due to the chain and gear arrangement, and thus a potential thief may be deterred, it is an easy operation, especially with the quick-release snap locks now used, to remove and therefore steal the front wheel of a bicycle. Thus, according to a further aspect of the present invention, a front wheel guard in combination with the device of the present invention is provided especially for public use locations, this front wheel guard being secured to the ground and comprising a pair of spaced-apart guard screens between which the front wheel of a bicycle is located when the bicycle frame is secured by the device of the present invention. These guard screens prevent or at least restrict access to the front wheel axle so that the front wheel is difficult, if not impossible, to remove, thieves being thereby deterred or frustrated. Preferably the screens are planar and preferably angled to each other to facilitate location of a front wheel therebetween. Further, the front wheel guard is preferably coupled to the device of the present invention by an elongate channel which serves as a locating guide for the bicycle wheels. Also, the guard screens are preferably joined together by a transverse member extending therebetween, the transverse member strengthening the guard construction and limiting any possible vertical movement of a front wheel, so that the front wheel axle and release locks are always between the screens and at least difficult to access. Preferably the transverse member is a curved member which is angled away from the device of the present invention so as to make it more difficult, if not impossible, to remove a front wheel of a bicycle, should the front wheel be detached from the frame, the angled curved member preventing forward motion of the released front wheel as its upper extremity is lower than the top of the wheel, as well as preventing vertical movement.

Whilst the front wheel guard is referred to hereabove in combination with the device of the present invention, the front wheel guard may be alternatively used according to a still further aspect of the present invention with any other form of bicycle security device suitable for physically retaining the bicycle frame and/or the rear wheel of -the bicycle in a predetermined location.

The present invention will now be further described, by way of example, with reference to the accompanying drawings, in which:-
Fig. 1 is a perspective view of a preferred embodiment of the present invention;
Fig. 2 is a perspective view of part of the embodiment of Fig. 1 from another direction.
Fig. 3 is a schematic illustration of an alternative form of locking arrangement for use between the remaining assembly and locking member of the present invention;
Fig. 4 is a prospective view of one form of control and lock for use with the locking arrangement of Fig. 3;
Fig. 5 is a perspective view of a coin operated control and lock for use with the locking arrangement of Fig. 3;
Fig. 6 is a perspective view of an electronic control and lock for use with the locking arrangement of Fig. 3; and
Fig. 7 is a schematic illustration of the basic mechanism utilised in the electronic control of Fig. 6.

The preferred embodiment of the present invention, illustrated in the accompanying drawings, comprises a retaining assembly 1 and an elongate, vertically extending locking member 3. The retaining assembly 1 comprises a hollow cylindrical part 5 which extends upwardly from a rectangular base plate 7 which is drilled as at 9, so that the base plate 7 can be secured to the ground by, for example, bolts, and an L-shaped member 11 which comprises two arms 13, 15, said arm 13 being retained in said hollow cylindrical part 5 so as to be axially slidable and rotatable therein. The locking member 3 is also secured to the base plate 7 and extends upwardly therefrom at a location spaced from said hollow cylindrical part 5. The arm 13 comprises two sections 13', 13'' which are hinged together at 17 so that with the arm 13 either fully or nearly fully extended out of cylindrical part 5, the arm 15 and section 13'' can be pivoted upwards from an in-use position wherein arm 15 is generally horizontal, to allow for access between the locking member 3 and the retaining assembly 1, i.e. to allow for the location or removal of a bicycle.

When the base plate 3 is secured to the ground in a required location, a bicycle can be located between the cylindrical part 5 and locking member 3 and the arm 15 can be pivoted to a position wherein the arm 15 extends generally horizontally through the frame of the bicycle. In this position the free end region of the arm 15 is engaged in a vertically extending elongate recess 19 in the locking member 3. The recess 19 is defined between walls 21 and 23, wall 21 having a vertically arranged series of circular apertures 25 and the wall 23 having a like series of cylindrical recesses 27. With the free end region of the arm 15 engaged in the recess 19, a transverse bore 29 provided in said free end region can be aligned with any aligned pair of aperture 25 and recess 27 and a cylindrical lock 31 can be slid into the aligned recess 27, transverse bore 29 and aperture 25 to secure the arm 15 to the locking member 3. In use, the L-shaped member is moved downwards to select the aligned aperture and recess nearest to the lowest part of the particular bicycle frame to be secured. In this way the arm 15 holds the bicycle securely to the ground, with the hinge 17 located within the cylindrical part 5 to avoid any possibility of tampering, the selection of vertical locking positions allowing different size bicycles to be properly secured.

The cylindrical lock 31 comprises a barrel with a key insertion aperture at one axial end face thereof, and at least one radially outwardly extending spring loaded locking flange 33. By inserting the appropriate key in the key insertion aperture, the/or each locking flange 33 is/are retracted and the barrel can be slid into the aligned recess 27, transverse bore 29 and aperture 25. Then, by removing the key, the locking flange or flanges 33 move outwardly under the spring bias to engage inside the recess 19, i.e. against the inside of wall 21, and prevent removal of the barrel. Thus the arm 15 and at least the frame of the bicycle, are secured to the locking member 3. By this arrangement a person can carry the tamper-proof lock 31 and use it at any location where the above described construction of the present invention is provided.

In addition to the above locking arrangement, a vertically arranged series of eyelets 35 are provided in a lateral flange 37 projecting from the wall 23 of the locking member 3. Also, a lateral flange 39 on the free end region of arm 15 has an eyelet 41 and with the arm 15 located in the recess 19 of the locking member 3, eyelet 41 can be aligned with any selected one of the eyelets 35 and a padlock slipped therethrough to secure the arm 15 to the locking member 3 in the desired vertical position.

Also secured to the base plate 7 and extending between the retaining assembly 1 and the locking member 3, is an elongate wheel guide or channel 43, and to protect against the theft of the front wheel of a bicycle secured by arm 15, there being less chance of the rear wheel being stolen due to the complex attachment and drive, e.g. chain, gears etc., a front wheel guard 45 is secured to the channel 43 at a location spaced from the base plate 7. This front wheel guard 45 comprises a base plate 47 which has apertures 49 by means of which the guard 45 can itself be secured to the ground, and a pair of guard screens 51 which are formed by planar metal sheets 53 secured to respective tubular frames 55 which project upwardly from the base plate 47. The frames 55 are connected together by a curved limb 57 to both strengthen the guard construction and to limit the possible upward movement of a bicycle front wheel when located between the screens 51. Further, to facilitate location of a front wheel between the screens 51, the screens 51 are angled to each other. The purpose of this guard 45 is to prevent or at least limit access to the front wheel axle, so that the usual simple release front wheel locks cannot be released and the wheel stolen.

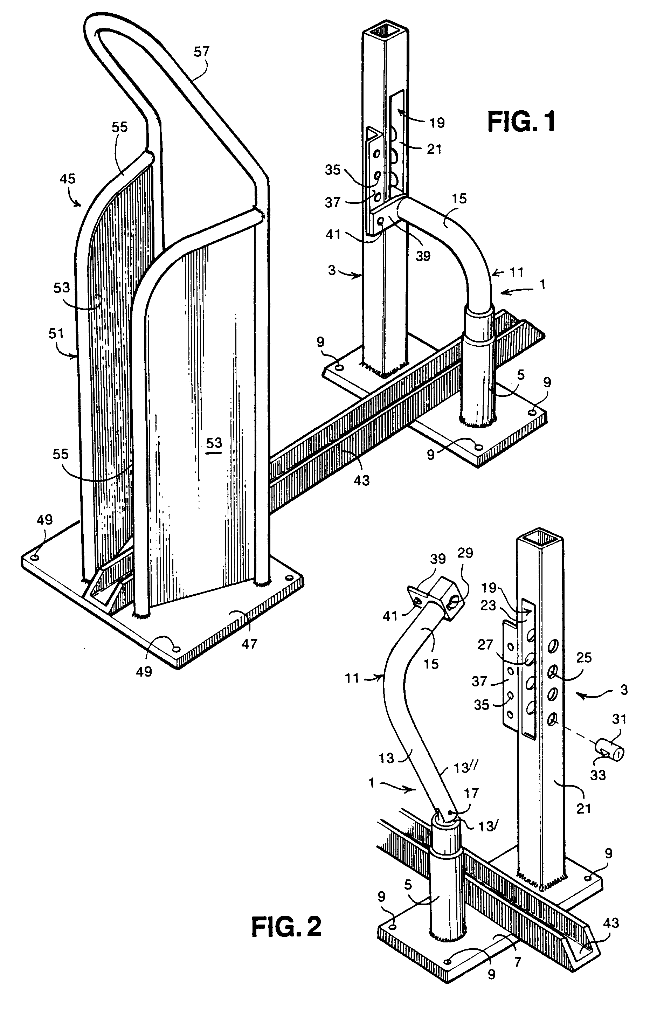

As seen in Fig. 1 the curved transverse limb 57 is angled away from the retaining assembly 1, 3 so that the upperment section of the limb 57 is usually below the level of the top of a wheel located between the screens 51, it thus being impossible to move a wheel forwards or upwards should it ever be detached from the frame when the frame is secured by the device of the present invention.

Whilst the present invention has been described hereinabove with a view to securing a single bicycle against theft, it is envisaged that by suitably spacing apart the cylindrical part 5 and the locking member 3, and with a suitably designed arm 15, two or more bicycles could be simply secured. Also, a number of single bicycle constructions, preferably incorporating front wheel guards, could be provided on a framework (not illustrated) for use as cycle racks.

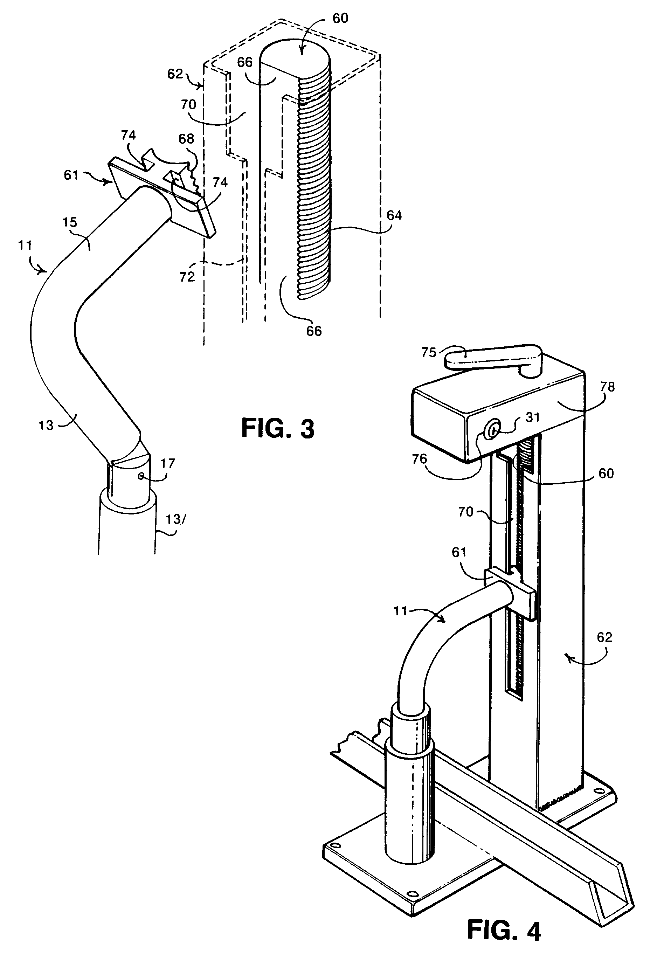

An alternative locking arrangement to the locking member 3 described hereabove, is illustrated in Fig. 3 of the accompanying drawings. This alternative locking arrangement comprises an elongate cylindrical rod 60 which co-operates with a locking head 61 provided on the free end of the arm 15 of the retaining assembly 1. The rod 60 is arranged virtually within a housing 62, the rod 60 being rotatable though fixed against axial movement thereof. The rod 60 has a series of parallel grooves 64 which extend transversely of the longitudinal axis of the rod 60, the grooves extending around the curved surface of the rod except for an axially extending flat 66 and being provided along the major part of the rod 60. In an alternative embodiment (not illustrated) the parallel grooves are provided by a thread formed in the surface of the rod 60. The locking head 61 is provided with a series of complimentary parallel projections and grooves 68, which can be engaged with the grooves 64 on the rod 60 as described herebelow, to secure the arm 15 at the desired height. By selecting a fine pitch for the grooves 64, 68 this enables the arm 15 to be positioned very accurately. Thus the available vertical lift that is possible when the bicycle is secured, is greatly restricted thereby further reducing the possibility of removal of a wheel and giving better general security.

As best seen in Fig. 4, the housing 62 is an elongate rectangular hollow box like structure with an elongate opening 70 provided on one face thereof through which the locking head 61 can be passed to engage with rod 60. The opening 70 extends for the major portion of the length of housing 62 and is wider at the top to allow for insertion of the locking head 61 when the rod 60 has been rotated to a position wherein flat 64 is adjacent to the opening 70. The lower region of the opening 70 is narrower and has side edge regions 72 which engage in parallel side grooves 74 in the locking head 61 as the locking head 61 is lowered to the desired height at which the arm 15 is adjacent to or against the bicycle frame. The rod 60 is then rotated as described here below and the grooves 64 on the rod are engaged with the projections/grooves in the locking head 61 to secure the arm 15 at the selected height, further rotation of the rod 60 being prevented by suitable means except by authorised personnel.

As regards the alternative locking arrangement described hereabove, rotation of the rod 60 to a locking position and locking of the rod 60 against unauthorised rotation can be effected by any desired means, various preferred options being disclosed with regard to Fig. 4 to 7 of the accompanying drawings.

The construction illustrated in Fig. 4 of the accompanying drawings has a manually rotatable handle 75 for rotating rod 60, a key operated cylinder lock as per lock 31 on Fig. 2 being locatable within an aperture 76 in an upper casing 78 from which handle 75 projects, to secure the rod 60 in a non rotatable position when the grooves 64 are opposite the opening 70. The cylinder lock secures rod 60 against rotation by engaging against an appropriately positioned flat surface formed in the upper end region of the cylindrical rod 60. As an alternative to the key operated cylinder lock 31 and appropriately positioned flat surface, the handle 75 can be secured in the locking position by a padlock (not shown) which passes through an eye in the handle 75 and an eye in a suitably positioned fixed projection extending from the upper housing 78.

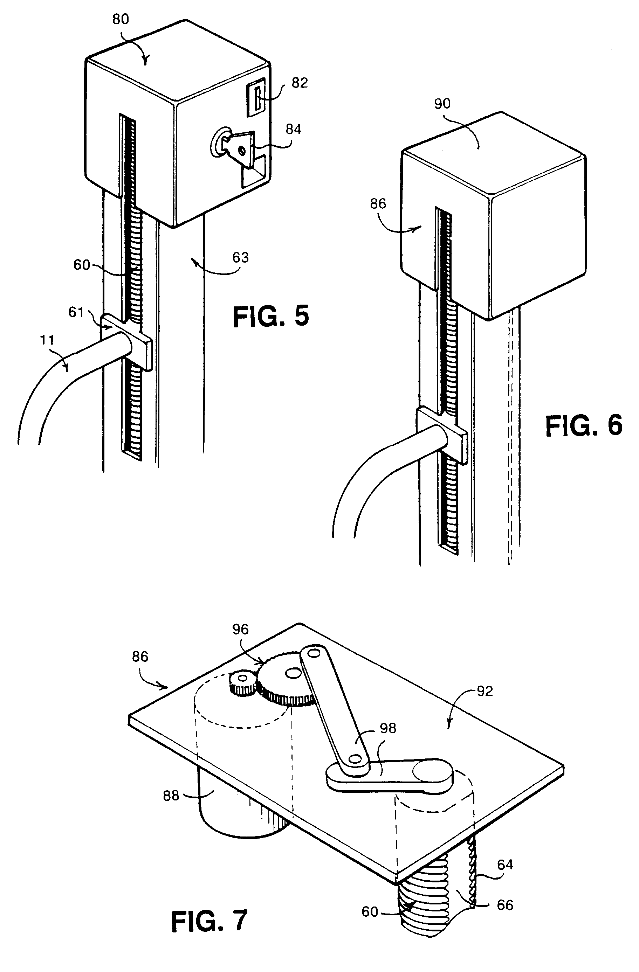

The construction illustrated in Fig. 5 of the accompanying drawings has a coin-operated assembly 80 which allows for rotation and locking of the rod 60. The assembly 80 is of conventional construction and when an appropriate coin is inserted in coin slot 82, a key 84 can be rotated, rotation of the key causing the rod 60 to rotate to the locking position wherein it engages the locking head, and a coin lock to secure the rod 60 in this locking position. The key 84 can then be removed. The locking arrangement is released by inserting and turning the key 84. The rod 60 is thereby rotated to release the locking 61 and the coin is returned via slot 82 or retained if there is a hire charge.

A further construction shown in Figs. 6 and 7 of the accompanying drawings uses an electrically powered lock 86 controlled by a computer or equivalent logic device (not shown). The lock 86 is opened and closed by an electric motor 88 which, together with associated gears, cams, levers and microswitches are housed in a secure enclosure 90. The actuating mechanism of the lock 86 is shown in Fig. 7 and comprises a base plate 92 and an electric motor 88 which drives gears 96. These gears 96 in turn move actuators levers 98 which move the rod 60 to either the open or closed position. The controlling computer or logic device i.e. controller, can be any convenient logic apparatus, which receives signals from microswitches (not shown). Included in the microswitch arrangement are security switches, designed to open when the security enclosure 90 is removed. This provides a signal to the controller which will cause an alarm to sound if the removal is unauthorised. A 'lockopen' microswitch, closes when the rod 60 has turned to the desired position, this being operated by lever assembly 98. The controller then switches off the power to the motor 88. When the controller is instructed to open the lock 86 the power to the motor 88 is switched on with reversed polarity. The motor 88, rotates the rod 60 to the released position when the 'Lockclosed' microswitches closes signalling the controller to switch off the power to the motor 88.
The present invention, especially in the form of the above described preferred embodiment, thus provides a simple-to-use bicycle security device which is readily usable with various sizes of bicycle requiring no difficult adjustment, and which is effectively tamper-proof.

## Claims

1. A device for securing a bicycle, motor-assisted bicycle and/or motor cycle in a fixed location, comprising a retaining assembly (1) and a locking member (3) which, in use, are secured to the ground, the retaining assembly (1) comprising a generally L-shaped member (11), one arm (13) of the generally L-shaped member (11) being axially slidable and rotatable about an at least substantially vertical axis relative to another member (5) of said assembly (1), the other arm (15) of the generally L-shaped member (11) being movable to a position wherein said other arm (15) extends, in use, through a frame of a bicycle located between said locking member (3) and said another member (5) of said assembly (1), said other arm (15) being lockable to the locking member (3) in any one of a number of vertically spaced apart locking positions, characterised in that the generally L-shaped member (11) is constructed in two parts (13',13'') which are hinged together so as to be pivotable relative to each other about a substantially horizontal axis, whereby said other arm (13') of said generally L-shaped member (13',13'') has effectively three degrees of possible movement to facilitate location of said other arm (13') through a frame of a bicycle.

2. A device according to claim 1, in which said other arm (15) of said generally L-shaped member (11) has a transverse bore provided in its free end region, said free end region being engageable in an elongate vertically oriented recess (19) in the locking member (3) and positionable to align said transverse bore with any one of a number of vertically spaced apart pairs of aligned apertures (25,27) provided in the facing walls (21,23) of said recess (19).

3. A device according to claim 2, in which a lock assembly (31) is engageable in the aligned apertures (25,27) and said transverse bore to lock the L-shaped member (11) to the locking member (3).

4. A device according to claim 3, in which the lock assembly (31) has outwardly extending gripping members (33) which hold the lock assembly (31) in the transverse bore, and which retract for release when a key is engaged in an end of the lock assembly (31).

5. A device according to any one of claims 1 to 4, in which a number of vertically spaced apart padlock eyelets (35) are provided in the locking member (3) and a like eyelet (41) is provided on the generally L-shaped member (11), a selected padlock eyelet (35) being alignable with said like eyelet (41) and securable thereto by a padlock.

6. A device according to claim 1, in which the locking member (3) comprises a rotatable, vertically arranged, cylindrical rod (60), said other arm (15) of the L-shaped member (11) having a locking head (61) which has a series of parallel projections and grooves (68) formed thereon, which projections and grooves (68) on the locking head (61) are interengageable with selected projections and grooves (64) which extend partially around said rod (60), generally transverse to the longitudinal axis of the rod (60), projections and grooves (64) being provided along the major portion of the length of the rod (60) and a flat surface (66) extending axially along part of the periphery of the cylindrical rod (60).

7. A device according to claim 6, in which said rod (60) is vertically arranged within a housing (62), the housing (62) having an elongate, vertically arranged opening (70) which is wider in its upper region as compared to its lower region, the upper region of the opening (70) being wide enough to allow said locking head (61) to be passed therethrough when the flat surface (66) on the rotatable rod (60) is opposite to said opening (70), the locking head (61) having parallel side grooves (74) which engage over side edge regions (72) of the narrower lower region of the opening as the locking head (61) and L-shaped member (11) are lowered to a selected height at which the rod (60) can be rotated to interengage the projections and grooves (68;64) on the locking head (61) and rod (60).

8. A device according to claim 6 or 7, in which the rod (60) is manually rotatable by a handle (75) and lockable in a rotational position wherein the projections and grooves (68;64) of the locking head (61) and rod (60) are interengaged, by a key-operated lock assembly (31) being engageable and lockable in a fixed position transverse to the axis of the rod (60) and against an appropriately positioned chordal flat surface provided on the rod (60).

9. A device according to claim 6 or 7, in which the rod (60) is rotatable by means of a key (84) which is released to be turned, by the insertion of an appropriate coin in a coin operated release mechanism (80), the key (84) being removable when a locked position for the locking head (61) and rod (60) is attained.

10. A device according to claim 6 or 7, in which the rod (60) is rotatable to a locked position by an electric motor (88) which is controlled by computer.

11. A device according to any one of the preceding claims, in combination with a front wheel guard (45) which is, in use, secured to the ground and which comprises a pair of spaced apart guard screens (53) between which the front wheel of a bicycle is located when the bicycle frame is secured by the device of the present invention.

12. A combination according to claim 11, in which the screens (53) are planar and angled to each other.

13. A combination according to claim 11 or 12, in which the screens (53) are interconnected by a transverse member (57).

14. A combination according to claim 13, in which the transverse member (57) interconnects upper regions of the screens (53), the transverse member (57) having a middle region which is angled away from the device of the present invention.

15. A combination according to any one of claims 11 to 14, in which the front wheel guard (45) and said device (1,3) are interconnected by an elongate channel (43) which serves as a locating guide for bicycle wheels of a bicycle secured by said device (1,3).

16. A device according to claim 6, in which the rod (60) is manually rotatable by a handle (75) and lockable in a rotational position wherein the projections and grooves (68,64) of the locking head (61) and rod (60) are interengaged, by a padlock which passes through an eye in the handle (75) and an eye provided at an adjacent fixed location.

## Patentansprüche

1. Vorrichtung zur Sicherung eines Fahrrads, Fahrrads mit Hilfsmotor und/oder Motorrads an einer ortsfesten Steile, umfassend eine Haltebaugruppe (1) und ein Verriegelungselement (3), die im Gebrauch am Boden befestigt sind, wobei die Haltebaugruppe (1) ein im allgemeinen L-förmiges Element (11) aufweist, wobei ein Arm (13) des im allgemeinen L-förmigen Elements (11) axial verschiebbar und um eine im Verhältnis zu einem anderen Element (5) der genannten Baugruppe (1) zumindest im wesentlichen vertikale Achse drehbar ist, wobei der andere Arm (15) des im allgemeinen L-förmigen Elements (11) in eine Stellung bewegt werden kann, in welcher sich der andere Arm (15) im Gebrauch durch einen Rahmen eines Fahrrads erstreckt, das sich zwischen dem genannten Verriegelungselement (3) und dem genannten anderen Element (5) der genannten Baugruppe (1) befindet, wobei der andere Arm (15) in einer beliebigen einer Anzahl von vertikal beabstandeten Verriegelungspositionen mit dem Verriegelungselement (3) verriegelungsfähig ist, dadurch gekennzeichnet, daß das im allgemeinen L-förmige Element (11) aus zwei Teilen (13', 13'') aufgebaut ist, die schwenkbar miteinander verbunden sind, um im Verhältnis zueinander um eine im wesentlichen horizontale Achse diehbar zu sein, wodurch der genannte andere Arm (13') des im allgemeinen L-förmigen Elements (13', 13'') effektiv drei mögliche Bewegungsgrade hat, um das Anordnen des genannten anderen Arms (13') durch einen Fahrradrahmen zu ermöglichen.

2. Vorrichtung nach Anspruch 1, bei der der genannte andere Arm (15) des genannten im allgemeinen L-förmigen Elements (11) eine Querbohrung in seinem freien Endabschnitt hat, wobei der genannte freie Endabschnitt mit einer länglichen, vertikal ausgerichteten Aussparung (19) im Verriegelungselement (3) in Eingriff gebracht werden kann und zum Ausrichten der genannten Querbohrung auf jedes beliebige einer Anzahl von vertikal beabstandeten Paaren aufeinander ausgerichteter Öffnungen (25,27) positionierbar ist, die in den einander gegenüberliegenden Wänden (21, 23) der genannten Aussparung (19) vorgesehen sind.

3. Vorrichtung nach Anspruch 2, bei der eine Verriegelungsbaugruppe (31) mit den aufeinander ausgerichteten Öffnungen (25, 27) und der genannten Querbohrung in Eingriff gebracht werden kann, um das L-förmige Element (11) an dem Verriegelungselement (3) zu verriegeln.

4. Vorrichtung nach Anspruch 3, bei dem die Verriegelungsbaugruppe (31) sich nach außen erstreckende Greifelemente (33) hat, welche die Verriegelungsbaugruppe (31) in der Querbohrung halten und welche zum Lösen zurückgezogen werden, wenn ein Schlüssel mit einem Ende der Verriegelungsbaugruppe in Eingriff ist (31).

5. Vorrichtung nach einem der Ansprüche 1 bis 4, bei dem im Verriegelungselement (3) eine Anzahl vertikal beabstandeter Vorhängeschloßösen (35) vorgesehen ist und an dem im allgemeinen L-förmigen Element (11) eine gleiche Öse (41) vorgesehen ist, wobei eine ausgewählte Vorhängeschloßöse (35) aufdie genannte gleiche Öse (41) ausrichtbar ist und durch ein Vorhängeschloß daran gesichert werden kann.

6. Vorrichtung nach Anspruch 1, bei der das Verriegelungselement (3) eine drehbare, vertikal angeordnete, zylindrische Stange (60) aufweist, wobei der genannte andere Arm (15) des L-förmigen Elements (11) einen Verriegelungskopf (61) hat, der eine Reihe von angeformten parallelen Vorsprüngen und Nuten (68) hat, wobei diese Vorsprünge und Nuten (68) am Verriegelungskopf (61) mit ausgewählten Vorsprüngen und Nuten (64) in Eingriff gebracht werden können, die teilweise um die genannte Stange (60) herum, im allgemeinen quer zur Längsachse der Stange (60), verlaufen, wobei am größten Abschnitt der Länge der Stange (60) entlang Vorsprünge und Nuten (64) vorgesehen sind und eine Flachstelle (66) axial an einem Teil des Umfangs der zylindrischen Stange (60) entlang verläuft.

7. Vorrichtung nach Anspruch 6, bei der die genannte Stange (60) in einem Gehäuse (62) vertikal angeordnet ist, wobei das Gehäuse (62) eine längliche, vertikal angeordnete Öffnung (70) hat, die im Vergleich zu ihrem unteren Bereich an ihrem oberen Bereich breiter ist, wobei der obere Bereich der Öffnung (70) breit genug ist, um den genannten Verriegelungskopf (61) hindurchzulassen, wenn sich die Flachstelle (66) an der drehbaren Stange (60) gegenüber der genannten Öffnung (70) befindet, wobei der Verriegelungskopf (61) parallele Seitennuten (74) hat, mit denen die Seitenrandbereiche (72) des schmaleren unteren Bereichs der Öffnung in Eingriff kommen, wenn der Verriegelungskopf (61) und das L-förmige Element (11) auf eine ausgewählte Höhe gesenkt werden, auf der die Stange (60) gedreht werden kann, um mit den Vorsprüngen und Nuten (68; 64) an Verriegelungskopf (61) und Stange (60) in Eingriff zu kommen.

8. Vorrichtung nach Anspruch 6 oder 7, bei der die Stange (60) mit einem Griff (75) von Hand drehbar und in einer Drehungsstellung arretierbar ist, wobei die Vorsprünge und Nuten (68; 64) von Verriegelungskopf (61) und Stange (60) von einer schlüsselbetätigten Verriegelungsbaugruppe (31), die in einer festen Position quer zur Achse der Stange (60) und gegen eine entsprechend angeordnete, an der Stange (60) vorgesehene flache Sehnenfläche in Eingriff gebracht und gesichert werden kann, miteinander in Eingriff gebracht werden.

9. Vorrichtung nach Anspruch 6 oder 7, bei der die Stange (60) mit Hilfe eines Schlüssels (84) drehbar ist, der durch Einfügen einer entsprechenden Münze in einen münzbetätigten Lösemechanismus (80) zum Drehen gelöst wird, wobei der Schlüssel (84) abziehbar ist, wenn für Verriegelungskopf (61) und Stange (60) eine verriegelte Position erreicht wird.

10. Vorrichtung nach Anspruch 6 oder 7, bei der die Stange (60) durch einen computergesteuerten Elektromotor (88) auf eine verriegelte Position drehbar ist.

11. Vorrichtung nach einem der vorangehenden Ansprüche in Kombination mit einem Vorderradsschutz (45), der im Gebrauch am Boden befestigt ist und ein Paar beabstandeter Schutzschilde (53) aufweist, zwischen denen das Vorderrad eines Fahrrads steht, wenn der Fahrradrahmen mit der Vorrichtung der vorliegenden Erfindung gesichert wird.

12. Kombination nach Anspruch 11, bei der die Schutzschilde (53) planar und im Winkel zueinander angeordnet sind.

13. Kombination nach Anspruch 11 oder 12, bei der die Schutzschilde (53) durch ein Querelement (57) miteinander verbunden sind.

14. Kombination nach Anspruch 13, bei der das Querelement (57) obere Bereiche der Schutzschilde (53) miteinander verbindet, wobei das Querelement (57) einen mittleren Abschnitt hat, der von der Vorrichtung dervorliegenden Erfindung abgewinkelt ist.

15. Kombination nach einem der Ansprüche 11 bis 14, bei denen der Vorderradschutz (45) und die genannte Vorrichtung (1, 3) durch eine längliche Rinne (43) miteinander verbunden sind, die als Aufnahme für Räder eines durch die genannte Vorrichtung (1, 3) gesicherten Fahrrads dient.

16. Vorrichtung nach Anspruch 6, bei der die Stange (60) mit einem Griff (75) von Hand drehbar und in einer Drehungsstellung arretierbar ist, wobei die Vorsprünge und Nuten (68; 64) von Verriegelungskopf (61) und Stange (60) von einem Vorhängeschloß, das durch eine Öse im Griff (75) und eine an einem angrenzenden ortsfesten Punkt vorgesehene Öse greift, miteinander in Eingriff gebracht werden.

## Revendications

1. Dispositif pour assurer une bicyclette, un vélomoteur et/ou une moto à un emplacement fixe, comprenant un ensemble de retenue (1) et un élément de verrouillage (3) qui, en utilisation, sont fixés au sol, l'ensemble de retenue (1) comprenant un élément globalement en forme de L (11), un bras (13) de l'élément globalement en forme de L (11) pouvant coulisser axialement et pivoter par rapport à un axe au moins sensiblement vertical par rapport à un autre élément (5) dudit ensemble (1), l'autre bras (15) de l'élément globalement en forme de L (11) étant mobile à une position à laquelle ledit autre bras (15) s'étend, en utilisation, à travers un cadre d'une bicyclette situé entre ledit élément de verrouillage (3) et ledit autre élément (5) dudit ensemble (1), ledit autre bras (15) pouvant être verrouillé sur l'élément de verrouillage (3) à l'une quelconque de différentes positions de verrouillage espacées verticalement, caractérisé en ce que l'élément globalement en forme de L (11) se compose de deux parties (13', 13'') qui sont articulées l'une à l'autre de manière à pouvoir pivoter l'une par rapport à l'autre autour d'un axe sensiblement horizontal, de manière à ce que ledit autre bras (13') dudit élément globalement en forme de L (13', 13'') ait effectivement trois degrés de déplacement possible afin de faciliter le positionnement dudit autre bras (13') à travers un cadre d'une bicyclette.

2. Dispositif selon la revendication 1, dans lequel ledit autre bras (15) dudit élément globalement en forme de L (11) a un alésage transversal prévu dans sa partie d'extrémité libre, ladite partie d'extrémité libre pouvant se mettre en prise dans un évidement allongé orienté verticalement (19) dans l'élément de verrouillage (3) et pouvant être positionnée pour aligner ledit alésage transversal avec l'une quelconque de différentes paires espacées verticalement d'ouvertures alignées (25, 27) prévues dans les parois se faisant face (21, 23) dudit évidement (19).

3. Dispositif selon la revendication 2, dans lequel un ensemble de verrouillage (31) peut se mettre en prise dans les ouvertures alignées (25, 27) et ledit alésage transversal pour verrouiller l'élément en forme de L (11) sur l'élément de verrouillage (3).

4. Dispositif selon la revendication 3, dans lequel l'ensemble de verrouillage (31) a des éléments de prise s'étendant vers l'extérieur (33) qui maintiennent l'ensemble de verrouillage (31) dans l'alésage transversal, et qui se rétractent pour le libérer lorsqu'une clé est engagée dans une extrémité de l'ensemble de verrouillage (31).

5. Dispositif selon l'une quelconque des revendications 1 à 4, dans lequel plusieurs oeillets de cadenas espacés verticalement (35) sont prévus dans l'élément de verrouillage (3) et un oeillet similaire (41) est prévu sur l'élément globalement en forme de L (11), un oeillet de cadenas choisi (35) pouvant être aligné sur ledit oeillet similaire (41) et fixé sur celui-ci au moyen d'un cadenas.

6. Dispositif selon la revendication 1, dans lequel l'élément de verrouillage (3) comprend une tige cylindrique rotative disposée verticalement (60), ledit autre bras (15) de l'élément en forme de L (11) ayant une tête de verrouillage (61) sur laquelle est formée une série de saillies et de rainures parallèles (68), lesdites saillies et rainures (68) sur la tête de verrouillage (61) pouvant se mettre en prise réciproque avec des saillies et rainures choisies (64) qui s'étendent partiellement autour de ladite tige (60), globalement transversalement à l'axe longitudinal de la tige (60), les saillies et rainures (64) étant disposées sur la plus grande partie de la longueur de la tige (60) et une surface plate (66) s'étendant axialement sur une partie de la périphérie de la tige cylindrique (60).

7. Dispositif selon la revendication 6, dans lequel ladite tige (60) est disposée verticalement dans un cache (62), le cache (62) ayant une ouverture allongée disposée verticalement (70) qui est plus large au niveau de sa partie supérieure qu'au niveau de sa partie inférieure, la partie supérieure de l'ouverture (70) étant suffisamment large pour laisser passer ladite tête de verrouillage (61) à travers lorsque la surface plate (66) sur la tige rotative (60) fait face à ladite ouverture (70), la tête de verrouillage (61) ayant des rainures latérales parallèles (74) qui se mettent en prise sur des parties de bord latérales (72) de la partie inférieure plus étroite de l'ouverture lorsque la tête de verrouillage (61) et l'élément en forme de L (11) sont abaissés à une hauteur choisie à laquelle la tige (60) peut être pivotée pour mettre en prise réciproque les saillies et rainures (68 ; 64) sur la tête de verrouillage (61) et la tige (60).

8. Dispositif selon la revendication 6 ou 7, dans lequel la tige (60) peut être pivotée manuellement à l'aide d'une poignée (75) et verrouillée à une position de rotation dans laquelle les saillies et rainures (68 ; 64) de la tête de verrouillage (61) et de la tige (60) sont en prise réciproque, au moyen d'un ensemble de verrouillage actionné par une clé (31) pouvant être mis en prise et verrouillé à une position fixe transversale à l'axe de la tige (60) et contre une surface plate à la corde positionnée de manière appropriée prévue sur la tige (60).

9. Dispositif selon la revendication 6 ou 7, dans lequel la tige (60) peut être p;votée au moyen d'une clé (84) qui est libérée de manière à pouvoir être tournée par l'introduction d'une pièce de monnaie appropriée dans un mécanisme de libération actionné par une pièce de monnaie (80), la clé (84) pouvant être retirée lorsque la tête de verrouillage (61) et la tige (60) atteignent une position verrouillée.

10. Dispositif selon la revendication 6 ou 7, dans lequel la tige (60) peut être pivotée à une position verrouillée par un moteur électrique (88) qui est commandé par un ordinateur.

11. Dispositif selon l'une quelconque des revendications précédentes, en combinaison avec un support de roue avant (45) qui, en utilisation, est fixé au sol et qui comprend une paire d'écrans de support espacés (53) entre lesquels la roue avant d'une bicyclette est placée lorsque le cadre de la bicyclette est assuré par le dispositif de la présente invention.

12. Combinaison selon la revendication 11, dans laquelle les écrans (53) sont plans et disposés obliquement l'un par rapport à l'autre.

13. Combinaison selon la revendication 11 ou 12, dans laquelle les écrans (53) sont interconnectés par un élément transversal (57).

14. Combinaison selon la revendication 13, dans laquelle l'élément transversal (57) interconnecte les parties supérieures des écrans (53), l'élément transversal (57) ayant une partie médiane qui forme un angle à l'opposé du dispositif de la présente invention.

15. Combinaison selon l'une quelconque des revendications 11 à 14, dans laquelle le support de roue avant (45) et ledit dispositif (1, 3) sont interconnectés par un canal allongé (43) qui sert de guide de positionnement pour les roues de bicyclette d'une bicyclette assurée par ledit dispositif (1, 3).

16. Dispositif selon la revendication 6, dans lequel la tige (60) peut être pivotée manuellement à l'aide d'une poignée (75) et verrouillée à une position de rotation, dans laquelle les saillies et rainures (68, 64) de la tête de verrouillage (61) et de la tige (60) sont en prise réciproque, au moyen d'un cadenas qui passe à travers un oeillet dans la poignée (75) et un oeillet prévu à un emplacement fixe adjacent.
